# FASCICULE DE BREVET EUROPEEN

(11) **EP 4 309 242 B1**
(45) Date de publication et mention de la délivrance du brevet: **28.05.2025**
(21) Numéro de dépôt: 22714864.0
(22) Date de dépôt: 15.03.2022
(51) Int. Cl.: H01Q 1/22, G06Q 20/18, G07F 7/08, H04B 5/00

(54) **DISPOSITIF DE PAIEMENT INTÉGRÉ DANS UNE BORNE DE PAIEMENT ÉLECTRONIQUE NON SURVEILLÉE**
IN EIN UNBEAUFSICHTIGTES ELEKTRONISCHES ZAHLUNGSENDGERÄT INTEGRIERTE ZAHLUNGSVORRICHTUNG
PAYMENT DEVICE INTEGRATED INTO AN UNATTENDED ELECTRONIC PAYMENT TERMINAL

(30) Priorité: 16.03.2021 FR 2102627
(43) Date de publication de la demande: 24.01.2024
(73) Titulaire: Banks and Acquirers International Holding, 75015 Paris (FR)
(72) Inventeur: SOUBIRANE, Alain, 26500 BOURG-LES-VALENCE (FR); ROBERT, Franck, 92150 Suresnes (FR); SOLEILHAVOUP, Olivier, 69007 LYON (FR); RAKOTOBE, Mampionona, 26000 VALENCE (FR); BOHORQUEZ PRIETO, Andres, 69008 LYON (FR); GOULON, Maxime, 26300 CHATUZANGE-LE-GOUBET (FR); DEMANGE, Fabien, 07130 SAINT-PERAY (FR)
(74) Mandataire: LLR
(86) Numéro de dépôt international: PCT/EP2022/056744
(87) Numéro de publication internationale: WO 2022/194889

(56) Documents cités:
- WO-A1-2017/009816
- US-A1- 2017 357 351

## Description

### Domaine de l'invention

L'invention se rapporte au domaine des terminaux de paiement dits non surveillés (appelés en anglais « unattended »), comme par exemple des bornes de paiement pour parking, stationnement, pour acheter des titres de transport ou des places de spectacle, des distributeurs de billets, des distributeurs de boissons ou friandises, des distributeurs de carburants ... appelés dans la suite de la description, pour une lecture plus aisée, «borne de paiement non surveillée » ou « borne de paiement ».

### Art antérieur

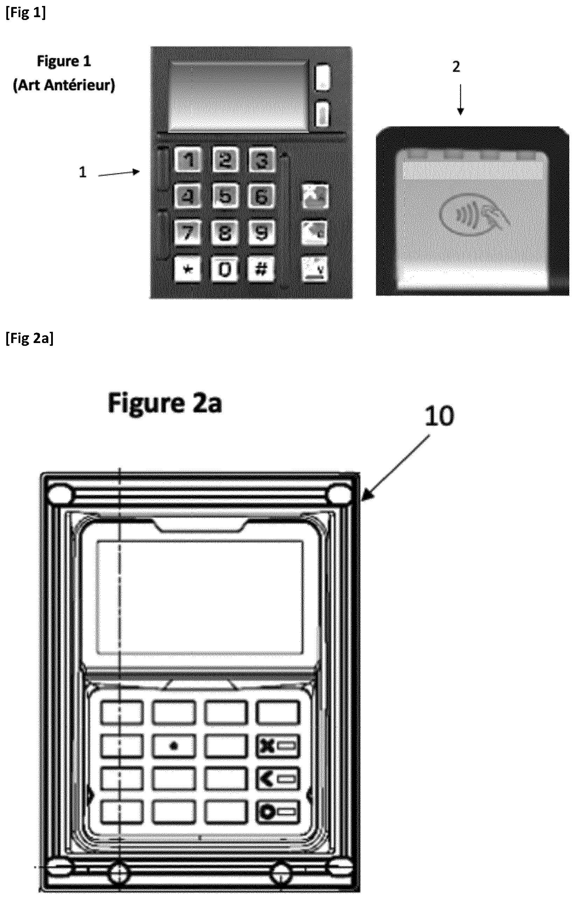

Actuellement, de telles bornes de paiement non surveillées comportent au moins deux dispositifs distincts, disposés par exemple côte à côte ou l'un au-dessus de l'autre dans la façade de la borne de paiement, ou du kiosque de parking, ou encore du distributeur... Par exemple, comme illustré sur la figure 1, ces deux dispositifs correspondent d'une part à un « clavier déporté » 1 ( « Pinpad » en anglais), comprenant un écran et un clavier, et d'autre part à une « cible » sans contact 2 (« Contactless » en anglais), comprenant une antenne sans contact et une zone affichant le logo sans contact. Ces deux dispositifs sont connectés entre eux afin de fonctionner comme un terminal de paiement électronique. Cependant, cette configuration avec deux dispositifs distincts présente certains inconvénients, notamment en termes d'ergonomie pour l'utilisateur, d'encombrement et de sécurité.

En effet, dans les terminaux de paiement électronique « surveillés », par exemple dans les commerces, la zone prévue pour approcher la carte en vue d'un paiement sans contact est aisément identifiable par l'utilisateur car elle se trouve sur le terminal de paiement électronique lui-même (soit sur l'écran, soit déportée sur le dessus du terminal de paiement électronique). En revanche, lorsque cette zone est déportée par rapport au reste du terminal de paiement électronique, comme dans une borne de paiement non surveillée, et notamment déportée par rapport à l'écran affichant les consignes pour le paiement (comme par exemple la consigne pour l'insertion de la carte dans le terminal de paiement électronique pour le paiement avec contact ou l'approche de la carte pour le paiement sans contact), l'utilisateur peut ne pas l'identifier aisément et perdre du temps à la chercher avant de pouvoir effectuer son paiement.

De plus, l'intégration de deux dispositifs distincts dans une borne de paiement non surveillée n'est pas optimale en termes d'encombrement car cela nécessite deux emplacements distincts au sein de la borne, ainsi que deux percements dans la façade de la borne de paiement non surveillée.

Cette configuration présente également des inconvénients en termes de sécurisation de la ou des connexions indispensables à la communication entre les deux dispositifs pour effectuer des transactions.

Il existe donc un besoin pour une solution permettant de répondre aux problématiques d'intégration d'un dispositif de paiement avec un module de paiement sans contact dans une borne de paiement non surveillée, tout en limitant les impacts de coût sur la fabrication des bornes de paiement non surveillées et en respectant les différentes normes sécuritaires liées à cette intégration et au paiement sans contact.

US2017/357351 enseigne un dispositif cumulant un module de communication sans contact, un pavé tactile et un écran. WO2017/009816 divulgue un périphérique ayant vocation à former une antenne sans contact auprès d'un terminal de paiement.

### Résumé de l'invention

La technique proposée permet de résoudre au moins certains des problèmes de l'art antérieur, via un dispositif de paiement électronique destiné à être intégré dans une borne de paiement électronique non surveillée, le dispositif de paiement électronique comprenant au moins une carte électronique, un écran et un clavier. Selon la présente technique, le dispositif de paiement électronique comprend un module de paiement sans contact comprenant au moins une antenne sans contact disposée dans un plan, dit plan d'antenne, surélevé d'une première distance prédéterminée par rapport au plan du clavier et surélevé d'une deuxième distance prédéterminée par rapport au plan de l'écran, la deuxième distance prédéterminée étant inférieure à la première distance prédéterminée.

La solution proposée repose sur une approche nouvelle et inventive de l'intégration d'un module de paiement sans contact, et plus particulièrement de l'antenne sans contact, dans un dispositif de paiement destiné à être intégré lui-même dans une borne de paiement non surveillée.

Pour ce faire, l'antenne est disposée dans un plan surélevé par rapport au plan du clavier métallique, le plan du clavier métallique étant sensiblement identique au plan métallique de la façade de la borne de paiement non surveillée, lorsque le dispositif de paiement est intégré de manière verticale dans la borne de paiement non surveillée. Ainsi, l'antenne est éloignée des parties métalliques formées par le clavier et la façade de la borne de paiement électronique non surveillée (le métal étant choisi pour des raisons de robustesse et de résistance aux impacts), limitant les interférences engendrées par ces parties métalliques « avant ».

De plus, la surélévation de l'antenne permet également de l'éloigner de la partie métallique « arrière » du dispositif de paiement électronique, limitant ainsi les interférences dues à toute partie métallique se trouvant à proximité de l'antenne.

Enfin, l'antenne est également surélevée par rapport au plan de l'écran, lui-même surélevé par rapport au plan du clavier métallique, pour des raisons de visibilité. De cette manière, la surélévation de l'antenne par rapport à l'écran la rapproche de la vitre de protection de l'écran dont la distance est optimisée par rapport à la façade de la borne de paiement non surveillée. L'écran se trouve donc en retrait à l'intérieur du boitier, ce qui permet de renforcer la sécurité de l'écran contre les actes de vandalisme.

Les plans d'antenne, d'écran et de clavier sont donc superposés et sensiblement parallèles.

Selon un aspect particulier de la présente technique, l'antenne sans contact est positionnée au-dessus de l'écran et présente une forme sensiblement identique à la forme de l'écran et l'antenne sans contact présente des dimensions supérieures à celles de l'écran.

Ainsi, l'antenne est positionnée dans la zone au-dessus de l'écran et elle est non seulement surélevée par rapport au plan de l'écran mais également plus grande que l'écran, assurant un éloignement suffisant par rapport à l'écran dans toutes les directions (autour et au-dessus de l'écran) de manière à limiter les interférences réciproques entre l'antenne et l'écran. Par exemple, l'antenne est pliée et conformée de sorte à reproduire la forme rectangulaire de l'écran, avec des dimensions supérieures à celles de l'écran et avec une partie descendante, le long d'un côté de l'écran, pour sa connexion sur la carte électronique.

Selon une caractéristique particulière, l'antenne sans contact est positionnée autour d'un support d'antenne à l'intérieur duquel l'écran est encastré.

Ainsi, la surélévation de l'antenne par rapport à l'écran est assurée par un support d'antenne, autour duquel l'antenne est positionnée et à l'intérieur duquel l'écran est lui-même positionné. Pour ce faire, les dimensions de l'antenne doivent donc être supérieures à celles de l'écran, car supérieures à celles du support dans lequel l'écran est encastré. Cette solution technique permet d'assurer son éloignement de l'écran, dans toutes les directions, tout en fournissant un support pour l'antenne.

Par exemple, ce support correspond à un boitier plastique de forme parallélépipédique (plus précisément sous la forme d'un pavé) présentant une vitre sur une de ses faces et une ouverture sur la face opposée pour l'insertion de l'écran (et du joint d'étanchéité autour de l'écran). L'antenne épouse la forme du support au niveau de la partie supérieure (proche de la vitre) des quatre autres faces du pavé. Lorsque le dispositif de paiement est assemblé, la vitre du boitier formant le support d'antenne se trouve ainsi dans un plan parallèle au plan de l'écran et au plan du clavier, les quatre faces autour desquelles l'antenne est enroulée étant perpendiculaires à ces plans d'écran et de clavier. Par exemple, l'antenne sans contact est disposée perpendiculairement au plan d'antenne de manière à ne pas gêner la visualisation de l'écran.

Ainsi, l'antenne étant disposée « autour » de l'écran, bien que dans un plan surélevé par rapport à celui de l'écran, il est préférable de la disposer verticalement, i.e. perpendiculairement au plan de l'écran, de manière à limiter son emprise et à ne pas empiéter sur l'écran. Ce positionnement vertical permet ainsi de ne pas rogner sur la taille de l'écran, par ailleurs soumise à des contraintes de compacité à respecter pour l'intégration du dispositif de paiement dans une borne de paiement non surveillée.

Ce positionnement vertical permet également d'adapter facilement l'antenne autour d'un support plastique en forme de pavé, par exemple dans une encoche prévue sur les faces « verticales » du pavé par rapport au plan du clavier.

Selon un aspect particulier de la technique proposée, le dispositif de paiement électronique est intégré dans un boitier comprenant une partie avant et une partie arrière la partie avant étant fabriquée dans une matière non conductrice répondant à des contraintes mécaniques de robustesse prédéterminées.

Ainsi, les interférences dues à des parties métalliques à proximité de l'antenne sont fortement limitées par l'utilisation d'un matériau non conducteur pour la partie avant du boitier du dispositif de paiement, et par la surélévation de l'antenne permettant de l'éloigner de la partie métallique avant correspondant à la façade de la borne de paiement non surveillée et de la partie métallique arrière du boitier. Cependant, le choix d'un tel matériau non conducteur pour la partie avant est également régi par des contraintes mécaniques de robustesse, la partie avant étant directement exposée aux risques de vandalisme.

Par exemple, la matière non conductrice est du Polycarbonate renforcé en fibres de verre. Le choix de cette matière résulte d'un compromis entre la résistance aux attaques de vandalisme, telles que des attaques aux objets tranchants (couteaux, ciseaux ..) ou à la flamme, et la précision de réalisation des pièces concernées, et en particulier de la partie avant du boitier du dispositif de paiement électronique, comprenant notamment un rebord sur sa périphérie.

Selon une caractéristique particulière, au moins une partie de l'antenne sans contact la reliant à la carte électronique du dispositif de paiement électronique est insérée dans une enceinte d'étanchéité en matière non conductrice.

Selon ce mode de réalisation, une solution est proposée afin de pallier les problèmes éventuels d'infiltration d'eau pouvant survenir du fait de l'exposition de l'antenne en face avant. Pour garantir l'étanchéité à l'endroit où l'antenne pénètre dans la zone étanche (carte électronique), un surmoulage en matière plastique est ainsi prévu à la base de l'antenne.

Selon un aspect particulier, le support d'antenne comprend une vitre sur une face opposée à la face formée par l'écran encastré dans le support d'antenne, et le volume entre la vitre et l'écran est inférieur à un volume prédéterminé, et un joint d'étanchéité est positionné autour de l'écran à l'intérieur du support d'antenne pour se prémunir des phénomènes de condensation.

Selon ce mode de réalisation, une solution est proposée afin de pallier les problèmes éventuels de condensation en réduisant le volume d'air compris entre la partie inférieure de la vitre et la partie supérieure de l'écran et en prévoyant un joint d'étanchéité autour de l'écran. Ce volume d'air est propre à la zone d'affichage.

Par ailleurs, le point milieu de l'antenne sans contact est connecté à la masse de la carte électronique.

Cette caractéristique permet de tenir compte des considérations de décharge ESD (« ElectroStatic Discharge » en anglais) dans la configuration où la partie avant du boitier du dispositif de paiement est en matériau non conducteur. En effet, dans ce cas, l'antenne représente la première partie métallique via laquelle l'utilisateur se décharge « électro statiquement » en apposant sa carte de paiement (contrairement aux configurations dans lesquelles c'est le lecteur de carte à puce qui permet d'offrir une zone de décharge ESD). En reliant le point milieu de l'antenne à la masse de la carte électronique, on évite donc que le composant sans contact soit endommagé par des décharges électrostatiques, en écoulant la décharge ESD dans la masse du dispositif de paiement.

Selon une caractéristique particulière, le dispositif de paiement électronique comprend en outre au moins un moyen de détection de la pose d'un dispositif espion sur le clavier parmi :
- un dispositif de rétroéclairage externe disposé au-dessus des touches du clavier ;
- une découpe dans la partie inférieure du rebord périphérique de la partie avant du boitier du dispositif de paiement électronique ;
- au moins un embossage à proximité des touches du clavier.

Ainsi, au moins l'un de ces moyens permet de détecter, de manière visuelle (par exemple par une personne en charge de la maintenance et de la surveillance ponctuelle de la borne de paiement non surveillée) la pose d'un clavier espion, ou faux clavier ou encore « skimmer » en anglais (technique permettant de récupérer le code confidentiel sur lequel il est saisi, à l'insu de l'utilisateur qui pense saisir son code directement sur le clavier de la borne de paiement) sur le clavier du dispositif de paiement.

En effet, le rétroéclairage externe disposé au-dessus des touches est modifié lorsqu'un faux clavier est collé par-dessus le clavier authentique du dispositif de paiement, et cette modification est détectable par une personne avisée dont le rôle est de détecter une tentative de piratage. De même, le rebord moins important en bas du clavier, facilitant d'ailleurs également l'accès aux touches du clavier, n'est plus visible si un faux clavier est collé. Enfin, un ou plusieurs embossages prévus entre certaines touches est (sont) forcément recouvert(s) par un faux clavier et l'absence de cet (ces) embossage(s) est facilement détectable par une personne avisée dont le rôle est de détecter une tentative de piratage.

### Liste des Figures

La technique proposée, ainsi que les différents avantages qu'elle présente, seront plus facilement compris à la lumière de la description qui va suivre de deux modes de réalisation illustratifs et non limitatifs de celle-ci, de leurs variantes, et des dessins annexés parmi lesquels :
[Fig 1] illustre un exemple de dispositif de paiement électronique selon l'art antérieur ;
[Fig 2a] illustre une vue de face d'un exemple de dispositif de paiement électronique selon un mode de réalisation de la technique proposée ;
[Fig 2b] illustre une vue arrière de l'exemple de dispositif de paiement électronique de la figure 2a ;
[Fig 3a] illustre un schéma représentant les plans d'antenne sans contact et de clavier dans un dispositif de paiement électronique selon un mode de réalisation de la technique proposée ;
[Fig 3b] illustre un schéma représentant les plans d'antenne sans contact, de clavier et d'écran dans un dispositif de paiement électronique selon un mode de réalisation de la technique proposée ;
[Fig 3c] illustre une vue en perspective d'une partie d'un dispositif de paiement électronique selon un mode de réalisation de la technique proposée ;
[Fig 4] illustre une vue éclatée d'une partie d'un dispositif de paiement électronique selon un mode de réalisation de la technique proposée ;
[Fig 5] illustre une enceinte d'étanchéité à la base de l'antenne sans contact dans un dispositif de paiement électronique selon un mode de réalisation de la technique proposée ;
[Fig 6] illustre une vue éclatée des principaux éléments composant le dispositif de paiement électronique selon un mode de réalisation de la technique proposée ;
[Fig 7] est un schéma illustrant la mise à la masse du point milieu de l'antenne sans contact selon un mode de réalisation de la technique proposée ;
[Fig 8a] illustre un premier exemple de moyen de détection de la pose d'un dispositif espion sur le clavier d'un dispositif de paiement électronique selon un mode de réalisation de la technique proposée ;
[Fig 8b] illustre un deuxième exemple de moyen de détection de la pose d'un dispositif espion sur le clavier d'un dispositif de paiement électronique selon un mode de réalisation de la technique proposée ;
[Fig 8c] illustre un troisième exemple de moyen de détection de la pose d'un dispositif espion sur le clavier d'un dispositif de paiement électronique selon un mode de réalisation de la technique proposée.

### Description détaillée de la technique proposée

La problématique à laquelle ont été confrontés les inventeurs de la présente demande réside dans l'intégration, au sein d'un unique dispositif de paiement électronique lui-même intégré dans une borne de paiement non surveillée, de la fonctionnalité de paiement sans contact. Un grand nombre de contraintes sont alors apparues, liées d'une part au contexte d'utilisation de ses bornes de paiement non surveillées et d'autre part aux exigences de fonctionnement et de sécurité de la fonctionnalité de paiement sans contact.

Ainsi, les inventeurs ont cherché à résoudre le problème technique consistant à intégrer une solution sans contact dans un support métallique (matériau indispensable pour résister aux intempéries et respecter les contraintes mécaniques indispensables pour résister au vandalisme auquel sont exposées les bornes de paiement non surveillées) tout en restant compatible avec les normes du paiement sans contact relatives à l'efficacité de l'antenne sans contact, avec une ergonomie optimale pour l'utilisateur, et avec les normes de sécurité liées aux terminaux de paiement électronique. D'autres contraintes plus spécifiques sont également apparues au cours du développement de chaque solution et sont décrites ci-après plus en détails.

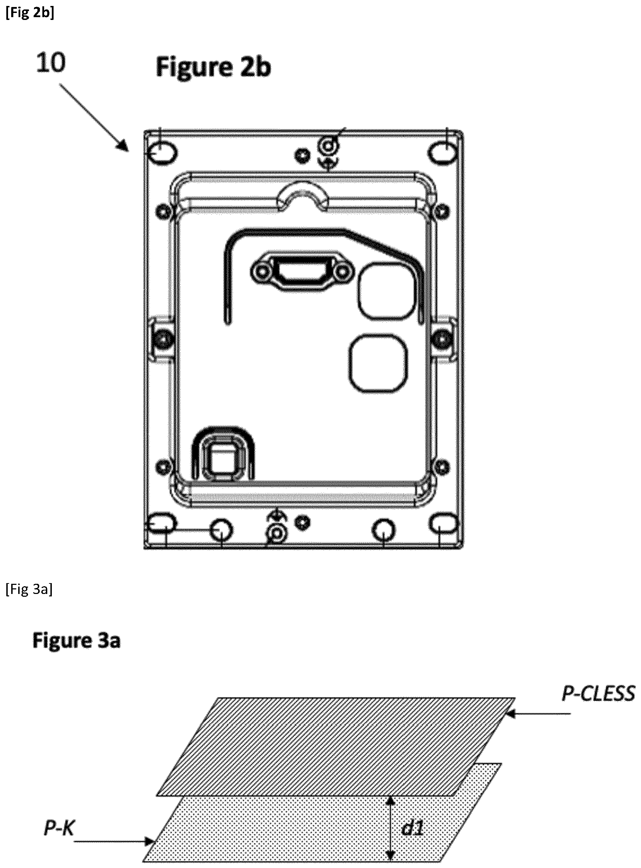

Le principe général de l'invention consiste donc à proposer un dispositif de paiement électronique en un seul boitier 10 (dont un exemple est illustré par les figures 2a et 2b, représentant respectivement une vue de face et une vue arrière), présentant toutes les fonctionnalités requises y compris le paiement sans contact et destiné à être intégré dans une borne de paiement non surveillée.

Pour ce faire, les inventeurs ont donc d'abord cherché à éloigner le plus possible l'antenne sans contact (du module de paiement sans contact) des parties métalliques présentes dans le dispositif de paiement électronique lui-même ainsi que dans la borne de paiement non surveillée dans laquelle il est intégré. L'antenne sans contact doit donc être éloignée d'une part du clavier métallique et de la partie arrière du boitier du dispositif de paiement électronique et d'autre part de la façade de la borne de paiement.

Selon le principe général, schématisé sur la figure 3a, le plan de l'antenne sans contact P-*CLESS* est donc surélevé par rapport au plan du clavier *P*-*K* du dispositif de paiement, d'une première distance d1 choisie de manière à limiter les interférences entre le clavier métallique et l'antenne sans contact. Par exemple, cette distance d1 se situe entre neuf et vingt millimètres, de préférence proche de neuf millimètres, distance résultant d'un compromis entre des performances optimales de l'antenne et la compacité du dispositif de paiement au niveau de l'antenne et de l'écran.

Cette surélévation pose cependant des problèmes liés au choix de l'emplacement de l'antenne au sein du dispositif de paiement.

En effet, cette surélévation suppose une différence de hauteur entre le clavier et l'antenne sans contact, ces deux éléments devant être cependant accessibles à l'utilisateur, pour saisir un code ou pour apposer une carte de paiement sans contact à proximité de l'antenne. Ainsi, cette surélévation engendre une augmentation significative de l'épaisseur du dispositif de paiement, du fait de cette différence de hauteur ente le clavier et l'antenne sans contact.

Les inventeurs ont donc cherché à positionner l'antenne de manière à minimiser l'impact de cette surélévation. Ainsi, ils ont d'abord testé un positionnement de l'antenne autour du dispositif de paiement, dans un rebord ceinturant celui-ci, en prévoyant également un rebord transversal au milieu du dispositif de paiement pour positionner le logo sans contact (afin de respecter les normes régissant le paiement sans contact). Cette configuration permet d'éloigner l'antenne sans contact du clavier, ainsi que de la façade de la borne de paiement non surveillée, car l'antenne est positionnée dans un plan surélevé par rapport au plan du clavier (sensiblement identique au plan de la façade de la borne de paiement). Cependant, cette configuration présente au moins les inconvénients suivants :
- le rebord ceinturant le dispositif de paiement dégrade sensiblement l'accessibilité aux touches du clavier, principalement celles situées en bas du clavier ;
- ce rebord dégrade également sensiblement la visibilité/lisibilité sur l'écran ;
- lorsque le dispositif de paiement est intégré de manière horizontale ou inclinée par rapport à la façade de la borne de paiement (et non verticalement, dans un plan sensiblement identique à celui de la façade), les renfoncements créés au niveau de l'écran et du clavier par les rebords périphériques et le rebord du milieu supportant le logo sans contact forment des sortes de « cuvettes » dans lesquelles l'eau (de pluie par exemple) stagne et est susceptible de dégrader le produit, ainsi que de limiter voire d'empêcher la lisibilité de l'écran notamment.

Les inventeurs ont donc cherché à résoudre ces problèmes en positionnant l'antenne ailleurs dans le dispositif de paiement et plus particulièrement en choisissant une configuration « autour » de l'écran. Il est à noter que ce choix va à l'encontre des évolutions d'architecture actuelle des terminaux de paiement électronique fixe ou portable car cette configuration d'antenne autour de l'écran est de moins en moins utilisée à ce jour pour des raisons de compacité et d'interférences réciproques entre l'antenne sans contact et l'écran, rendant difficile l'application des nouveaux standards de paiement sans contact.

Dans le cadre de la présente technique cependant, les inventeurs ont réussi à trouver une solution à ces problèmes d'interférences réciproques entre l'antenne sans contact et l'écran d'une part en surélevant l'antenne d'une deuxième distance d2 par rapport à l'écran (lui-même un peu surélevé par rapport au clavier pour une meilleure visibilité) et d'autre part en éloignant latéralement l'antenne du tour de l'écran.

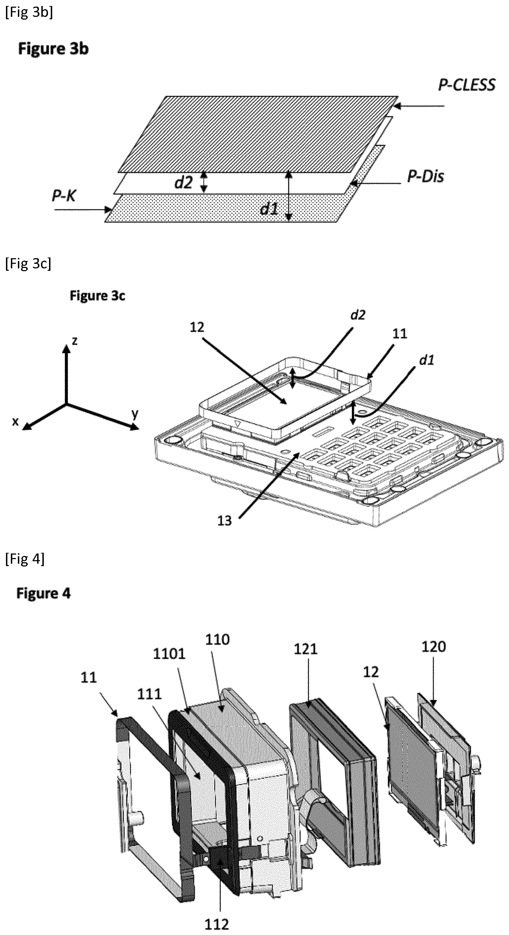

Cette configuration est schématisée sur la figure 3b, sur laquelle sont visibles les trois plans superposés de clavier *P-K,* d'écran *P-Dis* et d'antenne sans contact *P-CLESS.*

Par ailleurs, selon un mode de réalisation de la présente technique, l'antenne sans contact présente une forme sensiblement identique à celle de l'écran, i.e. le plus généralement un rectangle, avec des dimensions supérieures à celles de l'écran, de sorte à augmenter son éloignement « latéral » par rapport à l'écran. La figure 3c illustre une partie de certains éléments d'un dispositif de paiement selon un mode de réalisation de la présente technique, et en particulier l'antenne sans contact 11 de forme rectangulaire, surélevée d'une distance d1 par rapport au clavier 13 et d'une distance d2 par rapport à l'écran 12. Sur cette figure 3c, l'antenne sans contact 11 est positionnée verticalement (direction z dans le repère orthonormé) par rapport aux plans (x-y) de l'écran et du clavier notamment (i.e. par rapport au plan général du dispositif de paiement), de manière à limiter son emprise sur l'écran, qui peut ainsi être conçu avec une taille maximale sans contraintes liées au positionnement de l'antenne.

Ce positionnement vertical de l'antenne est rendu possible par l'utilisation d'un support d'antenne, en matière non conductrice, autour duquel l'antenne est appliquée.

La figure 4 illustre notamment ce support d'antenne, dans une vue éclatée d'une partie du dispositif de paiement permettant notamment de visualiser le positionnement de différents éléments les uns par rapport aux autres. Ainsi, lorsque le dispositif de paiement est assemblé, l'écran 12 est positionné sur un support d'écran 120 et entouré d'un joint d'écran 121 permettant d'assurer son étanchéité, lorsqu'il est encastré dans le support d'antenne 110. Par ailleurs, le choix précis du volume de l'espace créé entre l'écran et la vitre, i.e. un volume limité tout en assurant la distance nécessaire ente l'antenne et l'écran, permet également de pallier d'éventuels problèmes de condensation. De plus, l'antenne sans contact 11 est appliquée autour de son support 110, par exemple au niveau d'une sorte d'encoche 1101 prévue sur le pourtour supérieur du support 110. Pour ce faire, les dimensions de l'antenne 11 sont adaptées de sorte à ce qu'elle soit maintenue sur son support lorsqu'elle est insérée dans cette encoche 1101. Ainsi, l'antenne sans contact peut être fournie plate avec les autres composants du dispositif de paiement, de sorte à être conformée au moment de son intégration. elle est alors pliée pour prendre la forme et les dimensions de l'encoche 1101 prévue pour l'accueillir dans le support d'antenne 110.

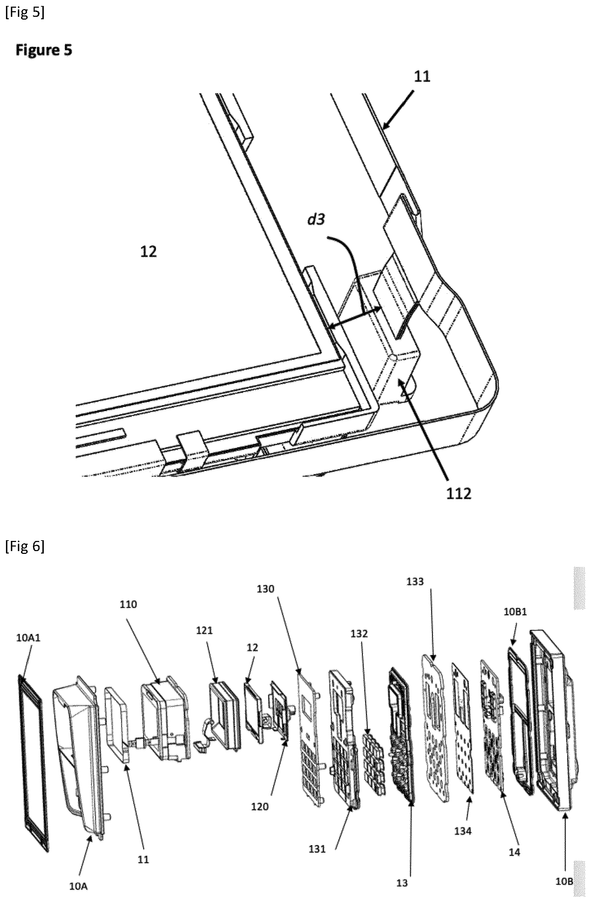

Par ailleurs, une face du support 110 est constituée par une vitre 111 correspondant à la vitre à travers de laquelle le logo de paiement sans contact est visible en provenance de l'écran 12. Cette vitre 111 correspond donc à la vitre sur laquelle l'utilisateur peut apposer sa carte bancaire pour un paiement sans contact. Enfin, une enceinte d'étanchéité 112, décrite plus en détails ci-après en relation avec la figure 5, permet de pallier d'éventuels risques d'infiltration d'eau et de condensation pouvant arriver jusqu'à l'écran voire la carte électronique à laquelle l'antenne est connectée.

Tous ces éléments illustrés en figure 4 sont fabriqués en matière non conductrice, par exemple de type Polycarbonate ou élastomère. De cette manière, l'assemblage de ces éléments ne comporte pas de matière métallique qui pourrait interférer avec l'antenne sans contact.

Comme indiqué précédemment, l'antenne sans contact est donc positionnée sur un plan d'antenne *P-CLESS* surélevé d'une distance d2 par rapport au plan d'écran *P-Dis,* ce qui engendre une distance d'2 proche de d2 entre l'écran 12 et la vitre 111. Cette distance d'2 correspond donc sensiblement à la hauteur du support d'antenne 110, car la vitre 111 correspond à la face supérieure du support d'antenne 110 et la face inférieure, opposée, correspond à l'écran 12 qui y est encastré. Cette configuration présente un avantage important en termes de robustesse de l'écran car celui-ci se trouve éloigné de la face avant de la borne de paiement et donc protégé d'éventuels actes de vandalisme. En revanche, cette distance *d'2* entre la vitre et l'écran présente également les inconvénients suivants, auxquels les inventeurs ont su remédier :
- un problème potentiel de condensation et d'infiltration d'eau, car l'antenne est proche de la vitre et la condensation à l'intérieur du boitier du dispositif de paiement risque de descendre le long de l'antenne jusqu'à l'écran, voire la carte électronique. Une solution à ce problème réside dans la mise en œuvre d'une enceinte d'étanchéité 112 à la base de l'antenne, au niveau de la partie de l'antenne qui la relie à la carte électronique. Cette enceinte d'étanchéité 112 correspond par exemple à un surmoulage, dans une matière non conductrice, à la base de l'antenne pour en garantir l'étanchéité. La figure 5 illustre plus particulièrement cette enceinte d'étanchéité 112 à la base de l'antenne, ainsi que la distance latérale *d3* entre l'antenne sans contact 11 et l'écran 12, permettant d'éloigner encore plus l'antenne sans contact 11 de l'écran 12 et donc de limiter les interférences réciproques. Cette enceinte d'étanchéité 112 comprend donc une ouverture dans laquelle l'antenne sans contact est insérée, jusqu'à sa connexion sur la carte électronique. C'est donc, dans ce mode de réalisation, le prolongement « vertical » de l'antenne qui est protégé par cette enceinte d'étanchéité 112. En effet, le clavier 13 constitue une zone étanche protégée par une membrane, par rapport à l'extérieur. L'antenne sans contact 11 doit se connecter dans cette zone étanche et l'enceinte d'étanchéité 112 permet d'éviter que le passage de l'antenne dans cette zone étanche n'en dégrade les performances.
- un problème de distance entre l'affichage du logo sans contact sur l'écran et la vitre sur laquelle l'utilisateur appose sa carte, cette distance étant régie par les normes du paiement sans contact définissant notamment des contraintes de positionnement du logo sans contact par rapport à l'antenne. Cependant, dans la configuration décrite ici, le logo affiché sur l'écran est éloigné de l'antenne sans contact, mais sa visibilité à travers la vitre permet d'utiliser la surface externe de la vitre comme référence de mesure et ainsi de respecter la norme.

La figure 6 illustre les principaux éléments composant le dispositif de paiement selon la présente technique, dans une vue éclatée permettant notamment de visualiser le positionnement de différents éléments les uns par rapport aux autres. On peut ainsi constater que l'antenne sans contact 11 est protégée par un capot avant 10A en matière non conductrice permettant de ne pas altérer ses performances d'émission, et par un joint d'étanchéité avant 10A1 (par exemple en élastomère). Par ailleurs, on note également que l'antenne sans contact 11 est éloignée des parties métalliques arrière du boitier du dispositif de paiement, et notamment de la face avant 130 en inox du clavier 13 (par exemple en silicone), de la plaque de renfort avant 131 du clavier 13, des touches métalliques 132 du clavier 13, de la plaque de renfort arrière 133 du clavier 13 et du capot arrière 10B lui-même. On répète ici que le boitier est métallique pour offrir une résistance optimale aux impacts, et que cette présence métallique est possible grâce à l'éloignement prévu de l'antenne sans contact. Le matériau du boitier arrière 10B est donc choisi comme étant le plus résistant possible par rapport au coût pouvant être supporté.

Le réseau de dômes de sécurité 134 (prévu pour protéger le clavier contre des tentatives d'intrusion destinées par exemple à insérer des dispositifs espions dans le clavier) est par exemple une pièce souple (ou flex) en polyimide, et le joint arrière 10B1, destiné à être inséré dans le capot arrière 10B, est par exemple fabriqué en élastomère comme le joint avant 10A1.

Le dispositif de paiement selon la présente technique doit également respecter les contraintes d'intégration dans une borne de paiement spécifiées notamment par l'association « EVA » (pour « European Vending & coffee service Association », en anglais) ou les contraintes d'autres formats historiquement utilisés par d'autres constructeurs. En particulier, les contraintes de robustesse au vandalisme sont très strictes et les inventeurs ont été confrontés à la nécessité de trouver un matériau non conducteur suffisamment solide pour remplacer le métal pour le boitier 10A avant du dispositif de paiement.

Afin de répondre notamment aux contraintes d'indice de résistance IK10, plusieurs matériaux plastiques ont été étudiés, comme la famille des « Thermodurs », non adaptés en raison du manque de finesse dans la réalisation des pièces et des contraintes d'intégration requises, et la famille des « Thermoplastiques ».

Plusieurs matières thermoplastiques ont été étudiées, comme le Polycarbonate, le Polycarbonate avec fibres de verre (PC GF) et le Polycarbonate/Acrylonitrile Butadiène Styrène (PC/ABS). Le Polycarbonate avec fibres de verre (PC GF) s'est avéré le plus résistant aux attaques aux objets tranchants (couteaux ou ciseaux) mais également le plus sensible à la flamme. Des résines polyuréthane de différentes duretés ont également été étudiées, mais leur fragilité à certaines attaques de vandalisme n'a pas permis de valider leur utilisation. Le matériau choisi résulte donc d'un compromis entre robustesse et contraintes de fabrication.

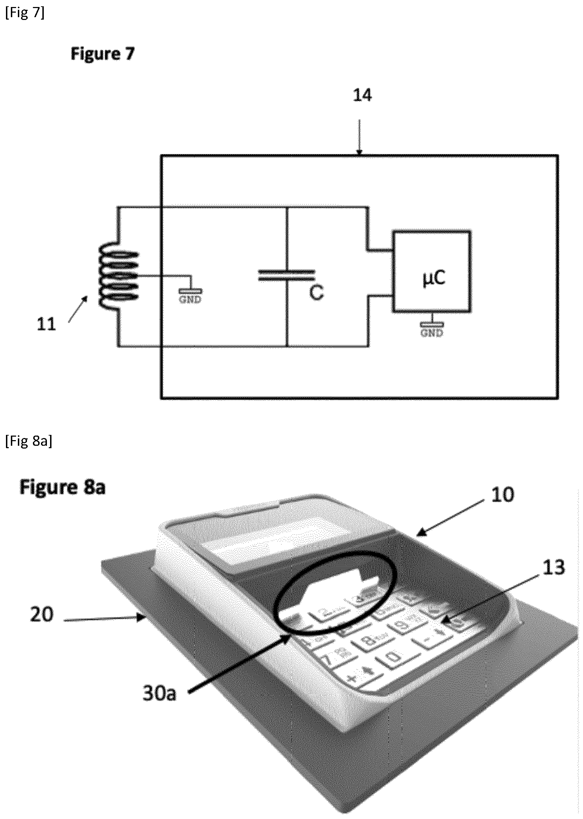

Par ailleurs, les considérations de décharge électrostatique (ESD) ont également dû être prises en compte, dans la mesure où la partie avant du boitier du dispositif de paiement est en matière non conductrice. En effet, dans la présente solution, la première partie métallique approchée par l'utilisateur lorsqu'il appose sa carte au moment du paiement sans contact, est l'antenne sans contact située à proximité de la vitre. L'antenne sans contact, et plus largement le module de paiement sans contact, se trouve donc être la première zone du dispositif de paiement dans laquelle l'utilisateur se décharge (comme le lecteur de carte lors d'un paiement avec insertion de carte, ce lecteur comportant des parties métalliques). Or, des décharges électrostatiques multiples et répétées sont susceptibles d'endommager fortement le module de paiement sans contact et les inventeurs ont mis en œuvre une solution afin d'éviter cet inconvénient : le point milieu de l'antenne sans contact est connecté à la masse de la carte électronique du dispositif de paiement, par exemple selon le schéma illustré en figure 7.

Par ailleurs, le dispositif de paiement de la présente technique répond également aux contraintes de lutte contre la fraude et notamment la pose de dispositif espion sur le clavier.

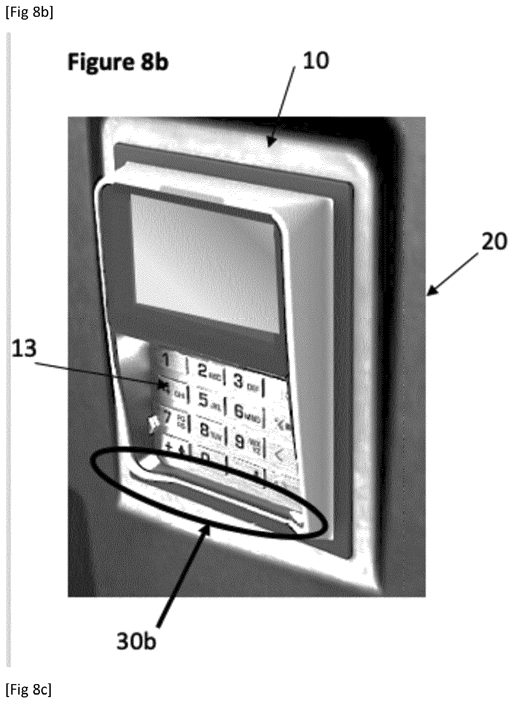

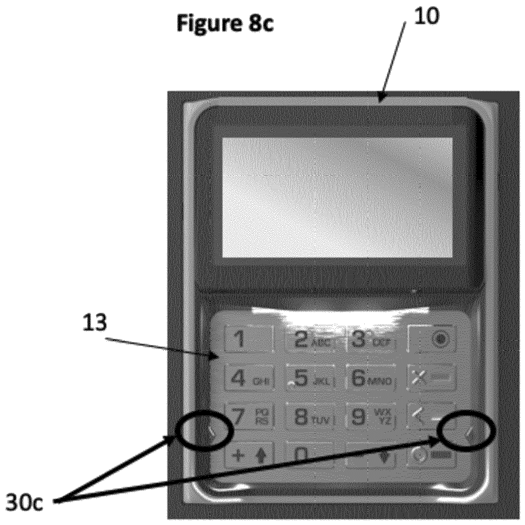

Pour ce faire, au moins une des trois techniques suivantes est mise en œuvre, comme illustré respectivement sur les figures 8a à 8c, permettant à une personne en charge de la maintenance et de la surveillance ponctuelle (par exemple une fois par jour) de la borne de paiement 20 de détecter un tel dispositif espion, comme par exemple un faux clavier :
- un module de rétroéclairage externe 30a situé au-dessus des touches du clavier 13. Ainsi, si un faux clavier est collé par-dessus le clavier 13, le faux clavier modifie et notamment limite l'éclairage sur le haut du clavier, ce qui peut être aisément détecté par simple observation de la borne de paiement ;
- un rebord 30b faisant partie de la ceinture sur la face avant du dispositif de paiement et présentant une découpe en bas des touches du clavier 13, facilitant également l'accès aux touches. Ainsi, si un faux clavier est collé par-dessus le clavier 13, le faux clavier est affleurant à ce rebord 30b, ce qui peut être aisément détecté par simple observation de la borne de paiement ;
- l'ajout d'au moins un embossage 30 c sur le clavier 13, par exemple deux triangles en relief situés de part et d'autre des touches du clavier 13. Si un faux clavier est collé par-dessus le clavier 13, ce faux clavier masque ces embossages, ce qui peut être aisément détecté par simple observation de la borne de paiement.

Enfin, le dispositif de paiement selon la présente solution comprend, de manière connue et non décrite ici, plusieurs boucles de sécurité et plusieurs systèmes de détection d'ouverture, situés au niveau de différents éléments sensibles comme par exemple la partie arrière du boitier, la carte électronique, la vitre, le clavier ... Le module de paiement sans contact étant également considéré comme un élément sensible, son positionnement à l'avant du dispositif de paiement permet ainsi de le protéger également d'éventuelles attaques par l'arrière du dispositif de paiement. Cela permet notamment de pallier l'absence d'une solution dite de « commissioning » destinée à détecter toute tentative de retrait du dispositif de paiement de la borne de paiement dans laquelle il est intégrée, solution devenue non obligatoire.

Les caractéristiques décrites précédemment permettent de répondre au problème technique consistant à fournir un dispositif de paiement électronique en un seul boitier, présentant toutes les fonctionnalités requises y compris le paiement sans contact et destiné à être intégré dans une borne de paiement non surveillée. Ainsi, le positionnement de l'antenne sans contact permet de remplir les conditions opérationnelles requises, en termes de performance d'émission, en limitant les interférences avec les parties métalliques indispensables du boitier du dispositif de paiement et de la borne de paiement non surveillée elle-même, ainsi qu'en limitant les interférences réciproques avec l'écran, tout en assurant une visibilité optimale de l'écran, une robustesse optimale aux intempéries et actes de vandalisme et une décharge électrostatique sans impact sur l'intégrité du module de paiement sans contact. Des solutions de lutte contre des tentatives de piratage sont également mises en œuvre.

## Revendications

1. Dispositif de paiement électronique (10) destiné à être intégré dans une borne de paiement électronique non surveillée, ledit dispositif de paiement électronique comprenant au moins une carte électronique (14), un écran (12) et un clavier métallique (13) muni de touches physiques, ledit dispositif de paiement électronique étant **caractérisé en ce qu'**il comprend un module de paiement sans contact comprenant au moins une antenne sans contact (11) disposée sur un plan, dit plan d'antenne (P-CLESS), surélevé d'une première distance prédéterminée (d1) par rapport au plan (P-K) dudit clavier et surélevé d'une deuxième distance prédéterminée (d2) par rapport au plan (P-Dis) dudit écran, ladite deuxième distance prédéterminée (d2) étant inférieure à ladite première distance prédéterminée (d1).

2. Dispositif de paiement électronique (10) selon la revendication 1, **caractérisé en ce que** ladite antenne sans contact (11) est positionnée au-dessus dudit écran (12) et présente une forme sensiblement identique à la forme dudit écran (12) et **en ce que** ladite antenne sans contact (11) présente des dimensions supérieures à celles dudit écran (12).

3. Dispositif de paiement électronique (10) selon la revendication 1, caractérisé en ce ladite antenne sans contact (11) est positionnée autour d'un support d'antenne (110) à l'intérieur duquel ledit écran (12) est encastré.

4. Dispositif de paiement électronique (10) selon la revendication 1, **caractérisé en ce que** ladite antenne sans contact (11) est disposée perpendiculairement audit plan d'antenne (P-CLESS) de manière à ne pas gêner la visualisation dudit écran (12).

5. Dispositif de paiement électronique (10) selon la revendication 1, **caractérisé en ce qu'**il est intégré dans un boîtier comprenant une partie avant (10A) et une partie arrière (10B), ladite partie avant (10A) étant fabriquée dans une matière non conductrice répondant à des contraintes mécaniques de robustesse prédéterminées.

6. Dispositif de paiement électronique (10) selon la revendication 5, **caractérisé en ce que** ladite matière non conductrice est du Polycarbonate renforcé en fibres de verre.

7. Dispositif de paiement électronique (10) selon la revendication 1, **caractérisé en ce qu'**au moins une partie de ladite antenne sans contact (11) la reliant à ladite carte électronique (14) dudit dispositif de paiement électronique (10) est insérée dans une enceinte d'étanchéité en matière non conductrice (112).

8. Dispositif de paiement électronique (10) selon la revendication 1, **caractérisé en ce que** ledit support d'antenne (110) comprend une vitre (111) sur une face opposée à la face formée par ledit écran (12) encastré dans ledit support d'antenne (110), et **en ce que** le volume entre ladite vitre (111) et ledit écran (12) est inférieur à un volume prédéterminé, et **en ce qu'**un joint d'étanchéité (121) est positionné autour dudit écran (12) à l'intérieur dudit support d'antenne (110) pour se prémunir des phénomènes de condensation.

9. Dispositif de paiement électronique (10) selon la revendication 1, **caractérisé en ce que** le point milieu de ladite antenne sans contact (11) est connecté à la masse de ladite carte électronique (14).

10. Dispositif de paiement électronique (10) selon la revendication 1, **caractérisé en ce qu'**il comprend en outre au moins un moyen de détection de la pose d'un dispositif espion sur ledit clavier (13) parmi :
- un dispositif de rétroéclairage externe (30a) disposé au-dessus des touches dudit clavier (13) ;
- une découpe dans la partie inférieure (30b) du rebord périphérique de la partie avant du boîtier dudit dispositif de paiement électronique (10) ;
- au moins un embossage (30c) à proximité des touches dudit clavier (13).

## Patentansprüche

1. Elektronische Zahlungsvorrichtung (10), die dazu bestimmt ist, in einen unbeaufsichtigten elektronischen Zahlterminal integriert zu werden, wobei die elektronische Zahlungsvorrichtung mindestens eine elektronische Karte (14), einen Bildschirm (12) und eine mit physischen Tasten versehene Metalltastatur (13) aufweist, wobei die elektronische Zahlungsvorrichtung **dadurch gekennzeichnet ist, dass** sie ein kontaktloses Zahlungsmodul aufweist, das mindestens eine kontaktlose Antenne (11) aufweist, die auf einer Ebene angeordnet ist, Antennenebene (P-CLESS) genannt, die um einen ersten vorbestimmten Abstand (d1) in Bezug auf die Ebene (P-K) der Tastatur erhöht ist und um einen zweiten vorbestimmten Abstand (d2) in Bezug auf die Ebene (P-Dis) des Bildschirms erhöht ist, wobei der zweite vorbestimmte Abstand (d2) kleiner als der erste vorbestimmte Abstand (d1) ist.

2. Elektronische Zahlungsvorrichtung (10) nach Anspruch 1, **dadurch gekennzeichnet, dass** die kontaktlose Antenne (11) über dem Bildschirm (12) positioniert ist und eine Form aufweist, die im Wesentlichen mit der Form des Bildschirms (12) identisch ist, und dass die kontaktlose Antenne (11) Abmessungen aufweist, die größer sind als die des Bildschirms (12).

3. Elektronische Zahlungsvorrichtung (10) nach Anspruch 1, **dadurch gekennzeichnet, dass** die kontaktlose Antenne (11) um einen Antennenträger (110) herum positioniert ist, in dessen Inneres der Bildschirm (12) eingebettet ist.

4. Elektronische Zahlungsvorrichtung (10) nach Anspruch 1, **dadurch gekennzeichnet, dass** die kontaktlose Antenne (11) senkrecht zur Antennenebene (P-CLESS) angeordnet ist, so dass sie die Anzeige des Bildschirms (12) nicht behindert.

5. Elektronische Zahlungsvorrichtung (10) nach Anspruch 1, **dadurch gekennzeichnet, dass** sie in ein Gehäuse integriert ist, das einen vorderen Teil (10A) und einen hinteren Teil (10B) aufweist, wobei der vordere Teil (10A) aus einem nicht leitenden Material hergestellt ist, das vorbestimmten mechanischen Robustheitsanforderungen genügt.

6. Elektronische Zahlungsvorrichtung (10) nach Anspruch 5, **dadurch gekennzeichnet, dass** das nichtleitende Material glasfaserverstärktes Polycarbonat ist.

7. Elektronische Zahlungsvorrichtung (10) nach Anspruch 1, **dadurch gekennzeichnet, dass** mindestens ein Teil der kontaktlosen Antenne (11), der sie mit der elektronischen Karte (14) der elektronischen Zahlungsvorrichtung (10) verbindet, in eine Dichtungskammer aus nichtleitendem Material (112) eingesetzt ist.

8. Elektronische Zahlungsvorrichtung (10) nach Anspruch 1, **dadurch gekennzeichnet, dass** der Antennenträger (110) eine Glasscheibe (111) auf einer Seite aufweist, die der Seite gegenüberliegt, die durch den Bildschirm (12) gebildet wird, der in den Antennenträger (110) eingebettet ist, und dass das Volumen zwischen der Glasscheibe (111) und dem Bildschirm (12) kleiner als ein vorbestimmtes Volumen ist, und dass eine Dichtung (121) um den Bildschirm (12) innerhalb des Antennenträgers (110) positioniert ist, um sich vor Kondensationserscheinungen zu schützen.

9. Elektronische Zahlungsvorrichtung (10) nach Anspruch 1, **dadurch gekennzeichnet, dass** der Mittelpunkt der genannten kontaktlosen Antenne (11) mit der Masse der genannten elektronischen Karte (14) verbunden ist.

10. Elektronische Zahlungsvorrichtung (10) nach Anspruch 1, **dadurch gekennzeichnet, dass** sie außerdem mindestens ein Mittel zum Erkennen des Anbringens einer Spionagevorrichtung auf der Tastatur (13) aufweist, darunter:
- eine externe Hintergrundbeleuchtungsvorrichtung (30a), die über den Tasten der Tastatur (13) angeordnet ist;
- einen Ausschnitt im unteren Teil (30b) des umlaufenden Randes des vorderen Teils des Gehäuses der elektronischen Zahlungsvorrichtung (10);
- Mindestens eine Prägung (30c) in der Nähe der Tasten der genannten Tastatur (13).

## Claims

1. Electronic payment device (10) intended to be integrated into an unattended electronic payment terminal, said electronic payment device comprising at least one electronic card (14), a screen (12) and a metal keypad (13) provided with physical keys, said electronic payment device being **characterised in that** it comprises a contactless payment module comprising at least one contactless antenna (11) arranged on a plane, said antenna plane (P-CLESS), raised by a first predetermined distance (d1) with respect to the plane (P-K) of said keypad and raised by a second predetermined distance (d2) with respect to the plane (P-Dis) of said screen, said second predetermined distance (d2) being less than said first predetermined distance (d1).

2. Electronic payment device (10) according to claim 1, **characterised in that** said contactless antenna (11) is positioned above said screen (12) and has a shape substantially identical to the shape of said screen (12) and **in that** said contactless antenna (11) has dimensions greater than those of said screen (12).

3. Electronic payment device (10) according to claim 1, **characterised in that** said contactless antenna (11) is positioned around an antenna support (110) inside which said screen (12) is embedded.

4. Electronic payment device (10) according to claim 1, **characterised in that** the said contactless antenna (11) is arranged perpendicular to the said antenna plane (P-CLESS) so as not to obstruct the viewing of the said screen (12).

5. Electronic payment device (10) according to claim 1, **characterised in that** it is integrated into a casing comprising a front part (10A) and a rear part (10B), said front part (10A) being made of a non-conductive material meeting predetermined mechanical strength constraints.

6. Electronic payment device (10) according to claim 5, **characterised in that** said non-conductive material is glass fibre-reinforced polycarbonate.

7. Electronic payment device (10) according to claim 1, **characterised in that** at least one part of said contactless antenna (11) connecting it to said electronic card (14) of said electronic payment device (10) is inserted in a sealing enclosure made of non-conductive material (112).

8. Electronic payment device (10) according to claim 1, **characterized in that** said antenna support (110) comprises a pane of glass (111) on a face opposite the face formed by said screen (12) embedded in said antenna support (110), and **in that** the volume between said pane (111) and said screen (12) is less than a predetermined volume, and **in that** a seal (121) is positioned around said screen (12) inside said antenna support (110) to guard against condensation phenomena.

9. Electronic payment device (10) according to claim 1, **characterised in that** the midpoint of said contactless antenna (11) is connected to the earth of said electronic card (14).

10. Electronic payment device (10) according to claim 1, **characterised in that** it further comprises at least one means for detecting the placing of a spy device on said keypad (13) from among :
- an external backlighting device (30a) arranged above the keys of said keypad (13);
- a cut-out in the lower part (30b) of the peripheral edge of the front part of the casing of said electronic payment device (10);
- at least one embossing (30c) near the keys of said keypad (13).
